# EUROPEAN PATENT SPECIFICATION

(11) **EP 4 608 715 B1**
(45) Date of publication and mention of the grant of the patent: **09.12.2026**
(21) Application number: 23844131.5
(22) Date of filing: 23.10.2023
(51) Int. Cl.: B64C 9/02, B64C 9/08, B64C 9/18

(54) **A CONTROL SURFACE MOVEMENT MECHANISM**
STEUERFLÄCHENBEWEGUNGSMECHANISMUS
MÉCANISME POUR LA MOTION DE SURFACES DE COMMANDE

(30) Priority: 25.10.2022 TR 202216193
(43) Date of publication of application: 03.09.2025
(73) Proprietor: Tusas- Turk Havacilik Ve Uzay Sanayii Anonim Sirketi, 06980 Ankara (TR)
(72) Inventor: ZEYBEK, Emirhan, 06980 Kahramankazan/Ankara (TR); ACIKGOZ, Firat, 06980 Kahramankazan/Ankara (TR); YAVUZ, Abdi Orhan, 06980 Kahramankazan/Ankara (TR)
(74) Representative: Berkkam, Ayfer
(86) International application number: PCT/TR2023/051180
(87) International publication number: WO 2024/091205

(56) References cited:
- EP-A1- 3 378 759
- SU-A1- 105 402
- US-A- 5 722 621
- US-A1- 2016 107 744
- US-A1- 2020 290 723

## Description

This invention relates to a control surface movement mechanism in an air vehicle with high maneuverability capabilities.

Flaps are mounted at a rear portion of wings of an air vehicle, usually close to a trailing edge and body, so as to provide lift to the wings at high speeds. As the speed of the air vehicle decreases during takeoff and landing, they expand the wing area to increase the pressure under the wing, so that the lift force is increased. When the flaps are opened while the aircraft is landing, air resistance increases such that speed of the aircraft decreases, thus allowing landing at a lower speed and at a lower distance. Various flap mechanisms, such as a flat flap, a slotted flap or a fowler flap, are used depending on the requirements of the air vehicle.

EP3718881A1, which is included in the known-state of the art, discloses a main wing, a control surface (slat) on a leading edge of an air vehicle wing, and a connection assembly that movably connects the control surface to the main wing. Said document discloses an air vehicle wing, in which the control surface can move between a retracted position and at least one extended position. The patent document further discloses usage of a guide rail on the wing.

EP3378759A1, which is included in the known-state of the art, discloses a compact and low-component actuation system for an airfoil trailing edge high-lift device, enabling movement along a curved track. The system allows precise positioning of the high-lift device, especially during take-off, with minimal or no chordwise gap between the device and the airfoil, thus reducing drag and enhancing lift performance.

US2020290723A1, which is included in the known-state of the art, discloses a system comprising a track and a resilient catcher to prevent the flap from over-traveling beyond its normal retracted position. The track includes a deployment profile that guides the flap's movement; this profile allows the resilient catcher to engage with a detent when the flap over-travels, thereby securely arresting the flap.

US5722621A1, which is included in the known-state of the art, discloses a bipod support system for a load-bearing member, such as the aft end of a trailing edge flap track, allowing limited lateral movement while ensuring stable equilibrium under upward force and primarily transmitting the load as shear to the aircraft structure. The system comprises two angled legs pivotally connected to both the airframe and the load-bearing member, enabling reliable, lightweight support without inducing high radial forces.

Thanks to a control surface system according to the present invention, flaps of an air vehicle can move in a wide range of angles in narrow areas.

Another object of the present invention is to provide a flap system suitable for an aircraft requiring high compactness and high maneuverability.

The control surface movement mechanism realized to achieve the object of the invention, which is defined in the first claim and other claims dependent thereon, comprises a body on an air vehicle; at least one wing on the body, which extends outward from the body and allows the air vehicle to rise depending on an air flow. There is at least one flap movable on the wing to enable the air vehicle to maneuver. There is at least one rail which allows the flap to move on the wing. There is at least one movable carriage on the rail. As the carriage moves, the wing connected with the carriage is moved. There is a plurality of fasteners that connect the flap and the carriage. Fasteners can flex within a tolerance value determined by the user, so as to prevent undesirable situations such as jamming and contraction on the flap. There is at least one fitting on the wing, which enables the wing and flap to be mounted to each other. There is a closed position (I), in which the flap is located on the wing and closest to the wing, and an open position (II), in which the flap is moved away from the wing from the closed position (I). Closed position (I) is a first position of the flap on the body, where it has not moved yet. The open position (II) is a position that is farther from the wing compared to the first position (I), in which the flap is moved to increase an angle of attack caused by the air flow thereon.

The control surface movement mechanism according to the invention comprises the rail in the form of an arc formed from a circle section. Preferably, the rigid rail has a constant radius and always has the same slope in a direction it extends. While the flap is moved from closed position (I) to open position (II) and/or from open position (II) to closed position (I), it is constantly moved by following the arc form. The rail is almost entirely the length of the arc that the flap system must scan, and the rail slope is constant, remaining intact. Thus, in an aircraft with high maneuverability, a flap movement is provided, which can be moved in a wide-angle range in a narrow area on the wing.

In an embodiment of the invention, the control surface movement mechanism comprises at least one actuator provided between the wing and the flap and rotating around its own axis. The actuator is in the form of a screw shaft. There is at least one nut that moves linearly on the actuator depending on the movement of the actuator. The nut is located on the actuator, almost completely perpendicular thereto. The actuator activates the nut by moving. The nut moves on the actuator, and thus, during the movement of the nut, movement of the flap occurs in the part where the actuator is connected to the fin.

In an embodiment of the invention, the control surface movement mechanism comprises the rail located on the body so as to be opposite the actuator. The actuator remains opposite the concave face of the rail. The flap is connected to the rail by the carriage and is activated by the carriage on the rail. Moreover, the flap connected to the actuator by means of the nut is brought from the closed position (I) to the open position (II) or from the open position (II) to the closed position (I) by the carriage sliding on the rail while the nut moves with a linear sliding movement on the actuator.

In an embodiment of the invention, the control surface movement mechanism comprises the nut with one end connected to the actuator and the other end to the flap. There is a male part at the connection interface of the nut to the flap, which provides optimum load distribution; and a female part which is connected to the male part to be inserted therethrough, and provides ease of assembly. The nut preferably has three degrees of freedom. Since the nut can rotate on the axis connected to the actuator, the axis connected to the flap and the rotational axis of the female part, such a movement flexibility allows elimination of undesirable situations such as stiffness, jamming and inability to move.

In an embodiment of the invention, the control surface movement mechanism comprises at least one universal joint that allows the actuator to be connected to the wing. The actuator is connected to the wing via the universal joint, such that there is no contraction and the flap movement is easily carried out while the nut moves on the actuator due to the movement of the carriage on the rigid rail, whose slope continues without being disrupted.

The universal joint preferably has two degrees of freedom. In this way, while the flap is moved from the closed position (I) to the open position (II), an end of the actuator connected to the wing can flex up and down.

The control surface movement mechanism comprises at least two fasteners located between the fitting and the rail. Fasteners preferably have degrees of freedom on at least two points, called "dogbone". Preferably, fasteners in rod form (two degrees of freedom) and triangle form (three degrees of freedom) are used. Fasteners allow the rail to move at least partially, thanks to their flexibility. Thus, undesirable situations such as contraction, jamming, and inability to move the control surface are prevented.

In an embodiment of the invention, the control surface movement mechanism comprises a plurality of intermediate positions (III) between the closed position (I) and the open position (II). The flap moves following the same slope while switching between each intermediate position (III). The distance of each point of the rail to its center is constant, which is in the form of an arc cut from a circle. As the flap moves on the rail, the arc and the rail scanned by the flap extend along the same range of angles. Thus, movement is achieved in a wide-angle range in a narrow area.

In an embodiment of the invention, the control surface movement mechanism comprises the carriage with the substantially same distance to the flap in all positions, including closed position (I), open position (II) and intermediate positions (III). The flap and the carriage are connected rigidly without contraction.

In an embodiment of the invention, the control surface movement mechanism comprises actuators that are opposite each other to have a rotational axis perpendicular to the axis where the flap is attached to the wing. For a wing, there is one flap, two actuators and two carriages. The actuators are located opposite each other, almost completely parallel to each other. The flap is moved upon simultaneous movement of the actuators.

In an embodiment of the invention, the control surface movement mechanism comprises the actuator that can flex via the universal joint during a movement. In order for the carriage to move on the rail with a fixed arc form without any contraction, and thus for the flap to move, the actuator first performs some upward flexing movement and then some downward flexing movement. The actuator performs the flexing movement thanks to the universal joint. Upon rotational movement of the actuator, the nut makes a linear sliding movement. The actuator flexes upward until the nut reaches almost the middle point of the actuator. It stretches downward almost completely after passing the midpoint. Thus, the flap movement is carried out comfortably and easily without any contraction.

In an embodiment of the invention, the control surface movement mechanism comprises the body on an air vehicle that is an aerobic training aircraft. The maneuverability of aerobic training aircraft is much higher than that of a passenger aircraft. While gravity in normal passenger aircraft is approximately two "g force" at most, it may approximately be seven to seven and a half "g force" during maneuvering in aerobic training aircraft. On the other hand, the area along which the flap must move to perform the maneuver is narrower and more limited compared to passenger aircraft. Passenger aircraft has a much larger area for flap movement than aerobic training aircraft. This creates the need to perform movements in a wide-angle range in a narrow area without contraction for the required maneuver. Thanks to the rail design with a constant slope, a greater maneuver can be achieved with a smaller angle of the flap compared to passenger aircraft. At the same time, the space between the carriage and the flap is almost completely minimized, thus ensuring compactness. Thanks to the high compactness, the drag is also reduced.

In an embodiment of the invention, the control surface movement mechanism comprises the carriage located on the rail to surround the rail, with the same form as the rail, thereby sliding on the rail.

In an embodiment of the invention, the control surface movement mechanism comprises the fitting connected from a middle point of the rail and from a point of the rail close to the wing. The fitting connects the wing and the rail to each other.

The control surface movement mechanism realized to achieve the object of the present invention is illustrated in the attached drawings, in which:
Figure 1 is a schematic view of the flap in the closed position (I).
Figure 2 is a side view of the flap in the intermediate position (III).
Figure 3 is a schematic view of the flap in the open position (II).
Figure 4 is a perspective view of the control surface movement mechanism.
Figure 5 is a perspective view of the rail, fastener and fitting.
Figure 6 is a side view of the rail, fastener and fitting.
Figure 7 is a perspective view of the nut.

All the parts illustrated in figures are individually assigned a reference numeral and the corresponding terms of these numbers are listed below:
1. Control surface movement mechanism
2. Body
3. Wing
4. Flap
5. Rail
6. Carriage
7. Fastener
8. Fitting
9. Actuator
10. Nut
   (101) Male part
   (102) Female part
11. Universal joint
   (I) Closed Position
   (II) Open Position
   (III) Intermediate Position

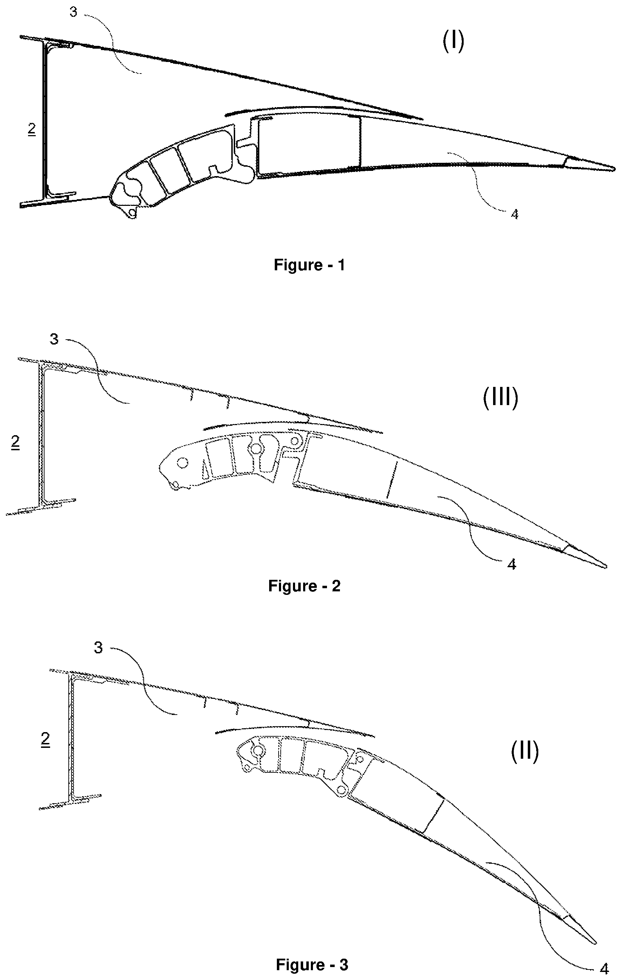

The control surface movement mechanism (1) comprises a body (2) on an air vehicle; at least one wing (3) located on the body (2), extending outward from the body (2), allowing the air vehicle to rise depending on the air flow; at least one flap (4) that is movable on the wing (3) and enables the air vehicle to maneuver; at least one rail (5) located on the wing (3) and allowing the flap (4) to move; at least one carriage (6) located movably on the rail (5) and thus, by means of its movement, moving the flap (4) to which it is connected; a plurality of fasteners (7) connecting the flap (4) and the carriage (6) and allowing the flap (4) to flex within a tolerance value determined by a user while moving; at least one fitting (8) located on the wing (3) and connecting the wing (3) and flap (4); a closed position (I) in which the flap (4) is located on the wing (3); an open position (II) in which the flap (4) is moved from the closed position (I) to move away from the wing (3) (Figure 1, Figure 4, Figure 6).

The control surface movement mechanism (1) according to the invention comprises the rail (5) in the form of an arc formed from a circle section; the flap (4) which is moved by continuously following the arc form while moving from the closed position (I) to the open position (II) (Figure 1, Figure 3, Figure 5).

The control surface movement mechanism (1) comprises a body (2) located on an air vehicle. There is at least one wing (3) on the body (2) that extends outwards from the body (2), lifts the air vehicle into the air and holds it in the air. There is at least one flap (4) on the wing (3) that can move, increase the carrying power of the air vehicle and enabling maneuvering. There is at least one rail (5) that allows the movement of the flap (4). Thanks to the carriage (6) moving on the rail (5), the flap (4) connected to the carriage (6) is moved. The flap (4) and the carriage (6) are mounted to each other by means of fasteners (7). Thanks to the degrees of freedom, fasteners (7) prevent undesirable situations such as jamming and contraction on the flap (4). There is at least one fitting (8) on the wing (3), which is located between the wing (3) and the flap (4) and connects the wing (3) and the flap (4). There is a closed position (I) in which the flap (4) is located on the wing (3), closer to the wing (3). There is an open position (II) in which the flap (4) is moved from the closed position (I) away from the wing (3).

There is a rail (5) formed from a circle section, with an unchanged arc form. Thanks to the continuous arc form of the rail (5), high angular movement (ability to move in a wide-angle range) and high compactness (ability to easily perform the desired wide-angle movement in a narrow and limited area) are provided. With high compactness, the drag exposure is also minimized. While the flap (4) is brought from the closed position (I) to the open position (II), it moves along the rail (5), whose slope does not change.

In an embodiment of the invention, the control surface movement mechanism (1) comprises at least one actuator (9) in the form of a screw shaft, which triggers the flap (4) and is located between the wing (3) and the flap (4) to be rotatable around its own axis; at least one nut (10) that slides on the actuator (9) depending on the movement of the actuator (9), thus at least partially allowing movement of the flap (4) at a part where the actuator (9) is connected to the flap (4). When the actuator (9) is triggered to rotate around its own axis, the nut (10) moves linearly on the actuator. When the nut (10) moves on the actuator (9), the flap (4) moves at a part where the actuator (9) is connected to the flap (4).

In an embodiment of the invention, the control surface movement mechanism (1) comprises the rail (5) located on the body (2) so as to be opposite the actuator (9); the flap (4) connected to the rail (5) by the carriage (6) and to the actuator (9) by the nut (10), wherein the flap (4) is moved from the closed position (I) to the open position (II) when the carriage (6) slides on the rail (5) while the nut (10) is performing linear sliding movement on the actuator (9). The actuator (9) is located opposite to the inner face of the rail (5). The flap (4) is connected to the rail (5) by the carriage (6) and to the actuator (9) by the nut (10). By triggering the actuator (9), the nut (10) moves on the actuator (9). Simultaneously, the carriage (6) slides on the rail (5). Thus, the flap (4) is moved and brought from the closed position (I) to the open position (II).

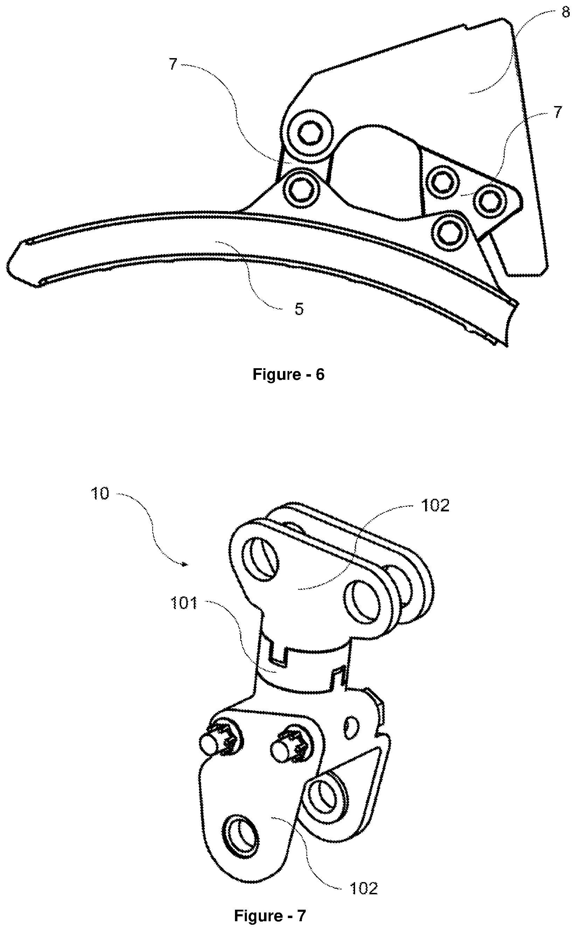

In an embodiment of the invention, the control surface movement mechanism (1) comprises the nut (10) with one end connected to the actuator (9) and the other end to the flap (4); a male part (101) that provides optimum load distribution at the connection interface of the nut (10) to the wing (4); and a female part (102) located to be inserted through the male part (101) and providing ease of assembly. There is a male part (101) at a part where the nut (10) is connected to the wing (4), enabling almost completely homogeneous load distribution. There is a female part (102) with a bifurcated structure that is engaged with the male part (101) and provides ease of assembly. Another male part (101) is connected to the actuator (9). The female part (102) is located between the male parts (101) in a recessed form so as to be capable of rotating. The male parts (101) have the same form-compatible recessed structure as the female part (102). Thus, both assembly of male parts (101) and female parts (102) becomes easier, and thanks to the nut (10) with three degrees of freedom rotatable through three points, undesirable situations such as contraction, jamming and inability to move the flap (4) are minimized (Figure 7).

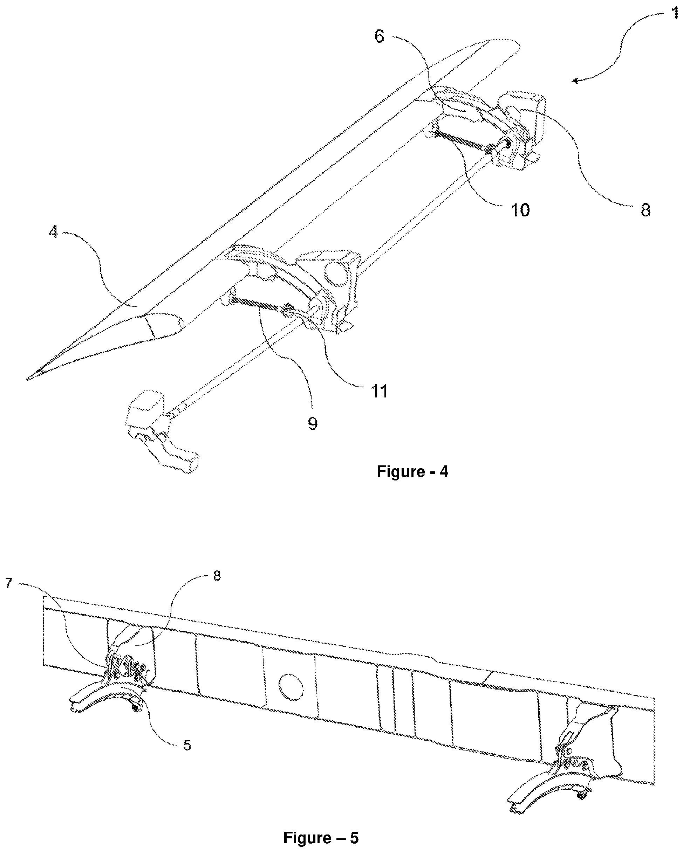

In an embodiment of the invention, the control surface movement mechanism (1) comprises at least one universal joint (11) allowing the actuator (9) to be connected to the wing (3), enabling an end of the actuator (9) connected to the wing (3) to flex up and down while the flap (4) is moved from the closed position (I) to the open position (II), thereby allowing the carriage (6) to move continuously on the rail (5) with constant curvature. Since the flap (4) does not perform a linear movement on the arc in the form of a circle section when opened, the actuator (9) must also flex. In order to prevent possible contraction movements due to the movement of the carriage (6) on the rail (5), the actuator (9) is connected to the wing (3) via the universal joint (11). The universal joint (11) is located between the actuator (9) and the wing (3) and connects the actuator (9) and the wing (3) to each other. While the flap (4) is moved from the closed position (I) to the open position (II), the end of the actuator (9) connected to the wing (3) is enabled to flex up and down. Thus, it is ensured that there is no contraction when the nut (10) moves on the actuator (9), such that flap (4) movement can be achieved easily. The universal joint (11) preferably has two degrees of freedom (Figure 4).

The control surface movement mechanism (1) comprises two fasteners (7) between the fitting (8) and the rail (5), which enable the rail (5) to be connected to the fitting (8) such that the rail (5) at least partially moves from at least two points, with a distance between fasteners (7). There are two fasteners (7) between the rail (5) and the fitting (8). Fasteners (7) preferably have degrees of freedom on at least two points, called "dogbone". Preferably, fasteners (7) in rod form (two degrees of freedom) and triangular form (three degrees of freedom) are used. The fasteners (7) enable the rail (5) to flex thanks to their degrees of freedom. Thus, the movement of the flap (4) can be adapted to aircraft with high maneuvering requirements in a compact manner without any contraction (Figure 6).

In an embodiment of the invention, the control surface movement mechanism (1) comprises a plurality of intermediate positions (III) between the closed position (I) and the open position (II); the flap (4) following the same slope between each intermediate position (III). The flap (4) moves on the rail (5) without changing the slope, in the form of an arc whose radius does not change, even though it is gradually opened in intermediate positions (III). As the flap (4) moves, in response to the movement of the flap (4), the rail (5) is designed to have a length that corresponds to the angle range that the flap (4) moves and scans in space. Thus, movement is achieved in a wide-angle range in a narrow area (Figure 2).

In an embodiment of the invention, the control surface movement mechanism (1) comprises the carriage (6) with substantially the same distance to the flap (4) in closed position (I), open position (II) and intermediate positions (III). The flap (4) and carriage (6) are connected rigidly to each other. While the carriage (6) moves on the rail (5), distance of the carriage (6) to the center of the rail (5), which is in the form of a circle section, is constant at each position.

In an embodiment of the invention, the control surface movement mechanism (1) comprises actuators (9) located opposite each other at a distance determined by the manufacturer, such that they have a rotation axis almost completely perpendicular to an axis where the flap (4) is connected to the wing (3). For a wing (3), there is preferably one flap (4), two actuators (9), two rails (5) and two carriages (6). Actuators (9) are placed to be opposite each other. The flap (4) is moved by the movement of the actuators (9).

In an embodiment of the invention, the control surface movement mechanism (1) comprises the actuator (9) with one end closer to the flap (4), such that when the nut (10) approaches the end of the actuator (9) closer to the flap (4), the actuator (9) can be stretched downwards and when the nut (10) moves away therefrom, the actuator (9) moves upwards, by means of the universal joint (11). The actuator (9) performs the flexing movement thanks to the degree of freedom of the universal joint (11). By triggering the actuator (9), the nut (10) moves linearly on the actuator (9). As the nut (10) moves on the actuator (9), the actuator (9) first stretches upwards and then downwards. Thus, the contraction is minimized and the flap (4) can move easily.

In an embodiment of the invention, the control surface movement mechanism (1) comprises the body (2) on an air vehicle which is an aerobic training aircraft. The loads on aerobic training aircraft are higher than in normal passenger aircraft. Its maneuverability is much higher than passenger aircraft. The area in which the flap (4) must move to perform the maneuver is narrow and limited compared to passenger aircraft.

In an embodiment of the invention, the control surface movement mechanism (1) comprises the carriage (6) form-compatible with the rail (5), which is located on the rail (5) to slide on the rail (5) and completely cover thereon.

In an embodiment of the invention, the control surface movement mechanism (1) comprises the fitting (8) connected to the rail (5) almost completely at the middle, at a point close to the wing (3).

## Claims

1. A control surface movement mechanism (1) comprising a body (2) on an air vehicle; at least one wing (3) located on that body, extending outward from the body,
allowing the air vehicle to rise depending on air flow; at least one flap (4) that is movable on the wing (3) and enables the air vehicle to maneuver; at least one rail (5) located on the wing (3) and allowing the flap (4) to move; at least one carriage (6) located movably on the rail (5) and thus, by means of its movement, moving the flap (4) to which it is connected; at least one fitting (8) located on the wing (3) and connecting the wing (3) and flap (4); a closed position (I) in which the flap (4) is located on the wing (3); an open position (II) in which the flap (4) is moved from the closed position (I) to move away from the wing (3), the rail (5) in the form of an arc formed from a circle section; the flap (4) which is moved by continuously following the arc form while moving from the closed position (I) to the open position (II);
**characterized in that** a plurality of fasteners (7) are provided, connecting the flap (4) and the carriage (6) and allowing the flap (4) to flex within a tolerance value determined by a user while moving;
and **in that** two fasteners (7) between the fitting (8) and the rail (5) are provided, which enable the rail (5) to be connected to the fitting (8) such that the rail (5) at least partially moves from at least two points, with a distance between fasteners (7).

2. A control surface movement mechanism (1) according to claim 1, **characterized by** at least one actuator (9) in the form of a screw shaft, which triggers the flap (4) and is located between the wing (3) and the flap (4) to be rotatable around its own axis; at least one nut (10) that slides on the actuator (9) depending on the movement of the actuator (9), thus at least partially allowing movement of the flap (4) at a part where the actuator (9) is connected to the flap (4).

3. A control surface movement mechanism (1) according to claim 2, **characterized by** the rail (5) located on the body (2) so as to be opposite the actuator (9); the flap (4) connected to the rail (5) by the carriage (6) and to the actuator (9) by the nut (10), wherein the flap (4) is moved from the closed position (I) to the open position (II) when the carriage (6) slides on the rail (5) while the nut (10) is performing linear sliding movement on the actuator (9).

4. A control surface movement mechanism (1) according to claim 2 or claim 3, **characterized by** the nut (10) with one end connected to the actuator (9) and the other end to the flap (4); a male part (101) that provides optimum load distribution at a connection interface of the nut (10) to the flap (4); and a female part (102) located to be inserted through the male part (101) and providing ease of assembly.

5. A control surface movement mechanism (1) according to any of the claims 2 to 4, **characterized by** at least one universal joint (11) allowing the actuator (9) to be connected to the wing (3), enabling an end of the actuator (9) connected to the wing (3) to flex up and down while the flap (4) is moved from the closed position (I) to the open position (II), thereby allowing the carriage (6) to move continuously on the rail (5) with constant curvature.

6. A control surface movement mechanism (1) according to any of the above claims, **characterized by** a plurality of intermediate positions (III) between the closed position (I) and the open position (II); the flap (4) following a same slope between each intermediate position (III).

7. A control surface movement mechanism (1) according to claim 6, **characterized by** the carriage (6) with the same distance to the flap (4) in closed position (I), open position (II) and intermediate positions (III).

8. A control surface movement mechanism (1) according to any of the claims 2 to 7, wherein the at least one actuator (9) comprises two actuators (9) located opposite each other at a distance determined by the manufacturer, such that they have a rotation axis perpendicular to an axis where the flap (4) is connected to the wing (3).

9. A control surface movement mechanism (1) according to any of the claims 5 to 8, wherein each actuator (9) comprises one end closer to the flap (4), such that when the nut (10) approaches the end of the actuator (9) closer to the flap (4), the actuator (9) can be stretched downwards and when the nut (10) moves away therefrom, the actuator (9) moves upwards, by means of the universal joint (11).

10. A control surface movement mechanism (1) according to any of the above claims, wherein the body (2) is part of an aerobic training aircraft.

11. A control surface movement mechanism (1) according to any of the above claims, **characterized by** the carriage (6) which is located on the rail (5) to slide on the rail (5) and completely cover the rail.

12. A control surface movement mechanism (1) according to any of the above claims, **characterized by** the fitting (8) connected to the rail (5) at the middle, at a point close to the wing (3).

## Patentansprüche

1. Ein Steuerflächenbewegungsmechanismus (1), umfassend einen Rumpf (2) an einem Luftfahrzeug; mindestens einen Flügel (3), der an diesem Rumpf angeordnet ist, sich nach außen von dem Rumpf erstreckt und dem Luftfahrzeug abhängig von der Luftströmung ein Steigen ermöglicht; mindestens eine Flügelklappe (4), die am Flügel (3) beweglich ist und dem Luftfahrzeug Manöver ermöglicht; mindestens eine Schiene (5), die am Flügel (3) angeordnet ist und die Bewegung der Flügelklappe (4) ermöglicht; mindestens einen Schlitten (6), der beweglich auf der Schiene (5) angeordnet ist und durch seine Bewegung die mit ihm verbundene Flügelklappe (4) bewegt; mindestens ein Verbindungsstück (8), das am Flügel (3) angeordnet ist und den Flügel (3) mit der Flügelklappe (4) verbindet; eine geschlossene Position (I), in der sich die Flügelklappe (4) am Flügel (3) befindet; eine offene Position (II), in der die Flügelklappe (4) aus der geschlossenen Position (I) vom Flügel (3) weg bewegt wird; wobei die Schiene (5) die Form eines Bogens aufweist, der aus einem Teil eines Kreises gebildet ist; wobei die Flügelklappe (4) beim Bewegen von der geschlossenen Position (I) in die offene Position (II) kontinuierlich der Bogenform folgt; **dadurch gekennzeichnet, dass** mehrere Befestigungselemente (7) vorgesehen sind, die die Flügelklappe (4) mit dem Schlitten (6) verbinden und es der Flügelklappe (4) ermöglichen, sich während der Bewegung innerhalb eines von einem Benutzer bestimmten Toleranzwerts zu biegen; und dass zwei Befestigungselemente (7) zwischen dem Verbindungsstück (8) und der Schiene (5) vorgesehen sind, die es ermöglichen, die Schiene (5) derart mit dem Verbindungsstück (8) zu verbinden, dass sich die Schiene (5) zumindest teilweise von mindestens zwei Punkten aus mit einem Abstand zwischen den Befestigungselementen (7) bewegen kann.

2. Ein Steuerflächenbewegungsmechanismus (1) nach Anspruch 1, **dadurch gekennzeichnet, dass** mindestens ein Aktor (9) in Form einer Schraubenwelle vorgesehen ist, der die Flügelklappe (4) betätigt und zwischen dem Flügel (3) und der Flügelklappe (4) angeordnet ist und sich um seine eigene Achse drehen kann; mindestens eine Mutter (10), die sich abhängig von der Bewegung des Aktors (9) auf diesem verschiebt und dadurch zumindest teilweise die Bewegung der Flügelklappe (4) an der Stelle ermöglicht, an der der Aktor (9) mit der Flügelklappe (4) verbunden ist.

3. Ein Steuerflächenbewegungsmechanismus (1) nach Anspruch 2, **dadurch gekennzeichnet, dass** die Schiene (5) am Rumpf (2) gegenüber dem Aktor (9) angeordnet ist; die Flügelklappe (4) mittels des Schlittens (6) mit der Schiene (5) und mittels der Mutter (10) mit dem Aktor (9) verbunden ist, wobei die Flügelklappe (4) von der geschlossenen Position (I) in die offene Position (II) bewegt wird, wenn der Schlitten (6) auf der Schiene (5) gleitet, während die Mutter (10) eine lineare Gleitbewegung auf dem Aktor (9) ausführt.

4. Ein Steuerflächenbewegungsmechanismus (1) nach Anspruch 2 oder 3, **dadurch gekennzeichnet, dass** die Mutter (10) ein Ende aufweist, das mit dem Aktor (9) verbunden ist, und ein anderes Ende, das mit der Flügelklappe (4) verbunden ist; ein männliches Teil (101), das eine optimale Lastverteilung an einer Verbindungsstelle zwischen der Mutter (10) und der Flügelklappe (4) gewährleistet; und ein weibliches Teil (102), das so angeordnet ist, dass es durch das männliche Teil (101) eingeführt werden kann und eine einfache Montage ermöglicht.

5. Ein Steuerflächenbewegungsmechanismus (1) nach einem der Ansprüche 2 bis 4, **dadurch gekennzeichnet, dass** mindestens ein Universalgelenk (11), das die Verbindung des Aktors (9) mit dem Flügel (3) ermöglicht und es einem mit dem Flügel (3) verbundenen Ende des Aktors (9) ermöglicht, sich beim Bewegen der Flügelklappe (4) von der geschlossenen Position (I) in die offene Position (II) nach oben und unten zu biegen, wodurch sich der Schlitten (6) kontinuierlich auf der Schiene (5) mit konstanter Krümmung bewegen kann.

6. Ein Steuerflächenbewegungsmechanismus (1) nach einem der vorstehenden Ansprüche, **dadurch gekennzeichnet, dass** eine Vielzahl von Zwischenpositionen (III) zwischen der geschlossenen Position (I) und der offenen Position (II) bestehen; wobei die Flügelklappe (4) zwischen jeder Zwischenposition (III) die gleiche Neigung aufweist.

7. Ein Steuerflächenbewegungsmechanismus (1) nach Anspruch 6, **dadurch gekennzeichnet, dass** sich der Schlitten (6) in der geschlossenen Position (I), der offenen Position (II) und den Zwischenpositionen (III) jeweils in demselben Abstand von der Flügelklappe (4) befindet.

8. Ein Steuerflächenbewegungsmechanismus (1) nach einem der Ansprüche 2 bis 7, **dadurch gekennzeichnet, dass** der mindestens eine Aktor (9) zwei Aktoren (9) umfasst, die einander in einem vom Hersteller festgelegten Abstand gegenüberliegen, so dass sie eine Drehachse aufweisen, die senkrecht zu einer Achse verläuft, an der die Flügelklappe (4) mit dem Flügel (3) verbunden ist.

9. Ein Steuerflächenbewegungsmechanismus (1) nach einem der Ansprüche 5 bis 8, **dadurch gekennzeichnet, dass** jeder Aktor (9) ein Ende aufweist, das näher an der Flügelklappe (4) liegt, sodass sich der Aktor (9) nach unten biegen kann, wenn sich die Mutter (10) dem Ende des Aktors (9) nähert, das näher an der Flügelklappe (4) liegt, und sich der Aktor (9) mittels des Universalgelenks (11) nach oben bewegt, wenn sich die Mutter (10) von diesem Ende entfernt.

10. Ein Steuerflächenbewegungsmechanismus (1) nach einem der vorstehenden Ansprüche, **dadurch gekennzeichnet, dass** der Rumpf (2) Teil eines Kunstflugzeugs für die Ausbildung ist.

11. Ein Steuerflächenbewegungsmechanismus (1) nach einem der vorstehenden Ansprüche, **dadurch gekennzeichnet, dass** der auf der Schiene (5) angeordnete Schlitten (6) auf der Schiene (5) gleitet und die Schiene (5) vollständig bedeckt.

12. Ein Steuerflächenbewegungsmechanismus (1) nach einem der vorstehenden Ansprüche, **dadurch gekennzeichnet, dass** das Verbindungsstück (8) mittig an der Schiene (5) an einem nahe am Flügel (3) gelegenen Punkt befestigt ist.

## Revendications

1. Mécanisme de déplacement de surface de commande (1) comprenant un corps (2) disposé sur un véhicule aérien ; au moins une aile (3) disposée sur ledit corps (2), s'étendant vers l'extérieur à partir du corps (2) et permettant au véhicule aérien de s'élever sous l'effet de l'écoulement d'air ; au moins un volet (4) mobile sur l'aile (3) et permettant au véhicule aérien d'effectuer des manœuvres ; au moins un rail (5) disposé sur l'aile (3) et permettant le déplacement du volet (4) ; au moins un chariot (6) disposé de manière mobile sur le rail (5) et permettant ainsi, par son déplacement, de déplacer le volet (4) auquel il est relié ; au moins un élément de liaison (8) disposé sur l'aile (3) et reliant l'aile (3) au volet (4) ; une position fermée (I) dans laquelle le volet (4) est disposé sur l'aile (3) ; une position ouverte (II) dans laquelle le volet (4) est déplacé depuis la position fermée (I) de manière à s'éloigner de l'aile (3) ; le rail (5) présentant une forme d'arc constituée par une portion de cercle ; le volet (4) étant déplacé en suivant continuellement ladite forme d'arc lors de son déplacement de la position fermée (I) à la position ouverte (II) ; **caractérisé en ce que** plusieurs éléments de fixation (7) sont prévus, reliant le volet (4) au chariot (6) et permettant au volet (4) de fléchir, pendant son déplacement, dans les limites d'une valeur de tolérance déterminée par un utilisateur ; et **en ce que** deux éléments de fixation (7) sont prévus entre l'élément de liaison (8) et le rail (5), permettant de relier le rail (5) à l'élément de liaison (8) de telle sorte que le rail (5) puisse se déplacer au moins partiellement en au moins deux points espacés l'un de l'autre d'une distance entre les éléments de fixation (7).

2. Mécanisme de déplacement de surface de commande (1) selon la revendication 1, **caractérisé en ce qu'**au moins un actionneur (9), sous la forme d'un arbre fileté, actionne le volet (4) et est disposé entre l'aile (3) et le volet (4) de manière à pouvoir tourner autour de son propre axe ; au moins un écrou (10) coulisse sur l'actionneur (9) en fonction du mouvement de l'actionneur (9), permettant ainsi au moins partiellement le déplacement du volet (4) au niveau d'une partie où l'actionneur (9) est relié au volet (4).

3. Mécanisme de déplacement de surface de commande (1) selon la revendication 2, **caractérisé en ce que** le rail (5) est disposé sur le corps (2) de manière à être opposé à l'actionneur (9) ; le volet (4) est relié au rail (5) par le chariot (6) et à l'actionneur (9) par l'écrou (10), le volet (4) étant déplacé de la position fermée (I) à la position ouverte (II) lorsque le chariot (6) coulisse sur le rail (5), tandis que l'écrou (10) effectue un mouvement de coulissement linéaire sur l'actionneur (9).

4. Mécanisme de déplacement de surface de commande (1) selon la revendication 2 ou la revendication 3, **caractérisé en ce que** l'écrou (10) présente une extrémité reliée à l'actionneur (9) et l'autre extrémité reliée au volet (4) ; une partie mâle (101) assure une répartition optimale de la charge au niveau d'une interface de liaison entre l'écrou (10) et le volet (4) ; et une partie femelle (102) est disposée de manière à être insérée à travers la partie mâle (101) et à faciliter l'assemblage.

5. Mécanisme de déplacement de surface de commande (1) selon l'une quelconque des revendications 2 à 4, **caractérisé en ce qu'**au moins un joint universel (11) permet de relier l'actionneur (9) à l'aile (3), permettant à une extrémité de l'actionneur (9) reliée à l'aile (3) de fléchir vers le haut et vers le bas lorsque le volet (4) est déplacé de la position fermée (I) à la position ouverte (II), permettant ainsi au chariot (6) de se déplacer de manière continue sur le rail (5) présentant une courbure constante.

6. Mécanisme de déplacement de surface de commande (1) selon l'une quelconque des revendications précédentes, **caractérisé en ce que** plusieurs positions intermédiaires (III) sont prévues entre la position fermée (I) et la position ouverte (II), le volet (4) suivant une même pente entre chacune des positions intermédiaires (III).

7. Mécanisme de déplacement de surface de commande (1) selon la revendication 6, **caractérisé en ce que** le chariot (6) se trouve à la même distance du volet (4) dans la position fermée (I), la position ouverte (II) et les positions intermédiaires (III).

8. Mécanisme de déplacement de surface de commande (1) selon l'une quelconque des revendications 2 à 7, dans lequel ledit au moins un actionneur (9) comprend deux actionneurs (9) disposés l'un en face de l'autre à une distance déterminée par le fabricant, de telle sorte que leurs axes de rotation soient perpendiculaires à un axe au niveau duquel le volet (4) est relié à l'aile (3).

9. Mécanisme de déplacement de surface de commande (1) selon l'une quelconque des revendications 5 à 8, dans lequel chaque actionneur (9) comprend une extrémité située plus près du volet (4), de telle sorte que, lorsque l'écrou (10) s'approche de l'extrémité de l'actionneur (9) située plus près du volet (4), l'actionneur (9) peut fléchir vers le bas et que, lorsque l'écrou (10) s'éloigne de ladite extrémité, l'actionneur (9) se déplace vers le haut au moyen du joint universel (11).

10. Mécanisme de déplacement de surface de commande (1) selon l'une quelconque des revendications précédentes, dans lequel le corps (2) fait partie d'un aéronef d'entraînement à la voltige aérienne.

11. Mécanisme de déplacement de surface de commande (1) selon l'une quelconque des revendications précédentes, **caractérisé en ce que** le chariot (6) est disposé sur le rail (5) de manière à coulisser sur le rail (5) et à recouvrir complètement le rail (5).

12. Mécanisme de déplacement de surface de commande (1) selon l'une quelconque des revendications précédentes, **caractérisé en ce que** l'élément de liaison (8) est relié au rail (5) en sa partie médiane, en un point proche de l'aile (3).
